# EUROPEAN PATENT APPLICATION

(11) **EP 3 920 364 A1**
(43) Date of publication of application: **08.12.2021**
(21) Application number: 20843821.8
(22) Date of filing: 03.06.2020
(51) Int. Cl.: H02J 7/00, H02J 9/06

(54) **BATTERY EQUALIZATION CIRCUIT AND CONTROL METHOD THEREFOR, AND UNINTERRUPTED POWER SUPPLY SYSTEM**

(30) Priority: 23.07.2019 CN 201910667923
(71) Applicant: Huawei Technologies Co., Ltd., Shenzhen, Guangdong 518129 (CN)
(72) Inventor: ZHANG, Chuntao, Shenzhen, Guangdong 518129 (CN)
(74) Representative: Gill Jennings & Every LLP
(86) International application number: PCT/CN2020/094227
(87) International publication number: WO 2021/012804

(57) **Abstract**

This application provides a battery equalization circuit, to resolve a problem of insufficient charging or discharging of some batteries due to differences between a plurality of batteries in a battery group. Equalization sub-circuits of the battery equalization circuit each include a battery cell, a first bidirectional switch, and a second bidirectional switch. Battery cells of the plurality of equalization sub-circuits are connected in series. A first terminal of the first bidirectional switch is coupled to a positive electrode of the battery cell, and a second terminal of the first bidirectional switch is coupled to a first terminal of an energy storage device. When a strobe terminal of the first bidirectional switch receives a turning-on signal, the first bidirectional switch is turned on and couples the positive electrode of the battery cell to the first terminal of the energy storage device. A first terminal of the second bidirectional switch is coupled to a negative electrode of the battery cell, and a second terminal of the second bidirectional switch is coupled to a second terminal of the energy storage device. When a strobe terminal of the second bidirectional switch receives a turning-on signal, the second bidirectional switch is turned on and couples the negative electrode of the battery cell to the second terminal of the energy storage device. In addition, this application further provides a method for controlling the battery equalization circuit, and an uninterruptible power system using the battery equalization circuit.

## Description

This application claims priority to Chinese Patent Application No. 201910667923.5, filed with the China National Intellectual Property Administration on July 23, 2019 and entitled "BATTERY EQUALIZATION CIRCUIT, METHOD FOR CONTROLLING BATTERY EQUALIZATION CIRCUIT, AND UNINTERRUPTIBLE POWER SYSTEM", which is incorporated herein by reference in its entirety.

### TECHNICAL FIELD

This application relates to the field of battery technologies, and in particular, to a battery equalization circuit, a method for controlling the battery equalization circuit, and an uninterruptible power system.

### BACKGROUND

An uninterruptible power system (uninterruptible power system, UPS) includes a battery group. The battery group can be charged when mains are normally supplied. When the mains are interrupted, the battery group is discharged to supply power to load in replacement of the mains. The battery group includes a plurality of batteries. Batteries are different from each other due to impact of an actual battery manufacturing process. Therefore, in the foregoing charging and discharge processes, some batteries are insufficiently charged or discharged, affecting performance of the battery group.

### SUMMARY

This application provides a battery equalization circuit, to resolve a problem of insufficient charging or discharging of some batteries due to differences between a plurality of batteries in a battery group. In addition, this application further provides a power supply system using the battery equalization circuit, and a method for controlling the battery equalization circuit.

To achieve the foregoing objective, the following technical solutions are used in embodiments of this application.

According to a first aspect of the embodiments of this application, a battery equalization circuit is provided. The battery equalization circuit includes an energy storage device and a plurality of equalization sub-circuits. Each equalization sub-circuit includes a battery cell, a first bidirectional switch, and a second bidirectional switch. In each equalization sub-circuit, a first terminal of the first bidirectional switch is coupled to a positive electrode of the battery cell, and a second terminal of the first bidirectional switch is coupled to a first terminal of the energy storage device. When a strobe terminal of the first bidirectional switch receives a turning-on signal, the first bidirectional switch is turned on and configured to couple the positive electrode of the battery cell to the first terminal of the energy storage device. A first terminal of the second bidirectional switch is coupled to a negative electrode of the battery cell, and a second terminal of the second bidirectional switch is coupled to a second terminal of the energy storage device. When a strobe terminal of the second bidirectional switch receives a turning-on signal, the second bidirectional switch is turned on and configured to couple the negative electrode of the battery cell to the second terminal of the energy storage device. In addition, battery cells of the plurality of equalization sub-circuits are connected in series.

In this way, second terminals of first bidirectional switches of different equalization sub-circuits are all coupled to a first terminal of a same energy storage device, and second terminals of second bidirectional switches are all coupled to a second terminal of the same energy storage device, so that the plurality of equalization sub-circuits are coupled to the same energy storage device. In this case, a strong battery with a maximum voltage value and a weak battery with a minimum voltage value can be selected from a plurality of battery cells of the battery equalization circuit by obtaining respective voltage values of the plurality of battery cells. A first bidirectional switch and a second bidirectional switch that are coupled to the strong battery are controlled to be on, so that the strong battery is coupled to the energy storage device, and excess power of the strong battery can be transmitted to the energy storage device to charge the energy storage device. When a voltage value of the energy storage device is the same as the voltage value of the strong battery, the first bidirectional switch and the second bidirectional switch that are coupled to the strong battery are controlled to be off to stop charging the energy storage device. Then, a first bidirectional switch and a second bidirectional switch that are coupled to the weak battery are controlled to be on, so that power stored in the energy storage device can be transmitted to the weak battery to charge the weak battery. When the voltage of the weak battery is the same as the voltage of the energy storage device, the first bidirectional switch and the second bidirectional switch that are coupled to the weak battery are controlled to be off to stop the energy storage device from discharging. Then, it may proceed to determine whether respective voltage of the plurality of battery cells is equalized. If not equalized, the foregoing steps are repeated until the respective voltage of the battery cells becomes equalized. It can be learned from the foregoing that: first, excess voltage of the strong battery is eventually transferred to the weak battery through the energy storage device, so that final voltage of the strong battery and the weak battery is equalized. Therefore, compared with a passive equalization mode in which a resistor consumes excess power of a battery, the battery equalization circuit provided in the embodiments of this application can reduce energy loss during voltage equalization. Second, in the battery equalization circuit provided in the embodiments of this application, each battery cell is connected to the energy storage element by using only a first bidirectional switch and a second bidirectional switch. Therefore, compared with an active equalization mode in which each battery needs to be connected to an isolated bidirectional DC/DC converter, the circuit is simpler and good for cost reduction. Third, during voltage equalization of the battery equalization circuit provided in the embodiments of this application, electric energy of the strong battery can be transferred point-to-point to the weak battery. The strong battery is the battery cell with the maximum voltage value in the plurality of battery cells of the battery group, and the weak battery is the battery cell with the minimum voltage value in the plurality of battery cells of the battery group. Therefore, there may be a plurality of other battery cells connected in series between the strong battery and the weak battery. Compared with a solution in which voltage equalization can be merely transferred between two adjacent batteries, the solution provided in this application can implement cross-battery transfer, thereby improving efficiency of voltage equalization.

Optionally, the first bidirectional switch includes a first switch tube, a second switch tube, a first diode, and a second diode. A first pole of the first switch tube is coupled to the positive electrode of the battery cell. A second pole of the first switch tube is coupled to a second pole of the second switch tube. A gate of the first switch tube is coupled to a gate of the second switch tube and serves as the strobe terminal of the first bidirectional switch. A first pole of the second switch tube is coupled to the first terminal of the energy storage device. A positive electrode of the first diode is coupled to the second pole of the first switch tube, and a negative electrode of the first diode is coupled to the first pole of the first switch tube. A positive electrode of the second diode is coupled to the second pole of the second switch tube, and a negative electrode of the second diode is coupled to the first pole of the second switch tube. In this case, when the battery cell needs to charge the energy storage device, the first switch tube and the second switch tube may be controlled to be on. In this case, a voltage value of the first pole of the first switch tube is greater than a voltage value of the second pole of the first switch tube, and charging current passes through the first switch tube. However, a voltage value of the second pole of the second switch tube is greater than a voltage value of the first pole of the second switch tube, and the charging current cannot be directly transmitted through the second switch tube. The second diode has a feature of unidirectional conduction, and therefore the charging current can be transmitted to the energy storage device through the second diode. Conversely, when the energy storage device needs to charge the battery cell, the first switch tube and the second switch tube may be controlled to be on. In this case, the voltage value of the first pole of the second switch tube is greater than the voltage value of the second pole of the second switch tube, and charging current passes through the second switch tube. However, the voltage value of the second pole of the first switch tube is greater than the voltage value of the first pole of the first switch tube, and the charging current cannot be directly transmitted through the first switch tube. The first diode has a feature of unidirectional conduction, and therefore the charging current can be transmitted to the battery cell through the first diode. In addition, when the gate of the first switch tube and the gate of the second switch tube each receive a cut-off signal, both the first switch tube and the second switch tube are cut off, and in this case, the first bidirectional switch is turned off. In this way, the first bidirectional switch can be turned on and off in both a forward direction and a reverse direction. The foregoing is an example of a structure of the first bidirectional switch. This application does not limit the structure of the first bidirectional switch provided that the first bidirectional switch can be turned on and off in the forward direction or the reverse direction.

The second bidirectional switch includes a third switch tube, a fourth switch tube, a third diode, and a fourth diode. A first pole of the third switch tube is coupled to the negative electrode of the battery cell. A second pole of the third switch tube is coupled to a second pole of the fourth switch tube. A gate of the third switch tube is coupled to a gate of the fourth switch tube and serves as the strobe terminal of the second bidirectional switch. A first pole of the fourth switch tube is coupled to the second terminal of the energy storage device. A negative electrode of the third diode is coupled to the first pole of the third switch tube, and a positive electrode of the third diode is coupled to the second pole of the third diode. A negative electrode of the fourth diode is coupled to the first pole of the fourth switch tube, and a positive electrode of the fourth diode is coupled to the second pole of the fourth switch tube. A working principle and a technical effect of the second bidirectional switch are similar to those of the first bidirectional switch, and are not repeated herein. The foregoing is an example of a structure of the second bidirectional switch. This application does not limit the structure of the second bidirectional switch provided that the second bidirectional switch can be turned on and off in a forward direction or a reverse direction.

Optionally, in some embodiments of this application, the energy storage device includes at least one capacitor. When the energy storage device includes a plurality of capacitors, the plurality of capacitors may be connected in parallel, and in this case, the energy storage device may have a relatively large capacitance value. Alternatively, the plurality of capacitors may be connected in series, and in this case, the energy storage device may have relatively large withstand voltage. Alternatively, some of the plurality of capacitors are connected in series, and the other capacitors are connected in parallel. Alternatively, in some other embodiments of this application, the energy storage device includes at least one inductor. When the energy storage device includes a plurality of inductors, the plurality of inductors may be connected in parallel, and in this case, the energy storage device may have relatively small impedance, thereby reducing generated heat. Alternatively, the plurality of inductors may be connected in series, and in this case, the energy storage device may have relatively large impedance. Alternatively, some of the plurality of inductors may be connected in series, and the other inductors may be connected in parallel.

Optionally, the battery equalization circuit further includes a voltage collection sub-circuit, a voltage comparison sub-circuit, and a strobe control sub-circuit. The voltage collection sub-circuit is configured to be coupled to a positive electrode and a negative electrode of each battery cell to collect a voltage value of the battery cell, and be coupled to the first terminal and the second terminal of the energy storage device to collect a voltage value of the energy storage device. The voltage comparison sub-circuit is configured to obtain a strong battery with a maximum voltage value and a weak battery with a minimum voltage value from a plurality of battery cells, and compare the voltage value of the strong battery with that of the energy storage device, and the voltage value of the weak battery with that of the energy storage device. The strobe control sub-circuit is coupled to a strobe terminal of each first bidirectional switch, a strobe terminal of each second bidirectional switch, and the voltage comparison sub-circuit. The strobe control sub-circuit is configured to input a strobe signal to respective strobe terminals of a first bidirectional switch and a second bidirectional switch that are coupled to the strong battery, and when the voltage value of the strong battery is the same as the voltage value of the energy storage device, input a strobe signal to respective strobe terminals of a first bidirectional switch and a second bidirectional switch that are coupled to the weak battery. Therefore, under the action of the voltage collection sub-circuit, the voltage comparison sub-circuit, and the strobe control sub-circuit, the first bidirectional switch and the second bidirectional switch that are coupled to the weak battery or the strong battery can be controlled to be on and off, finally implementing voltage equalization of the plurality of battery cells.

According to a second aspect of the embodiments of this application, an uninterruptible power system is provided. The uninterruptible power system includes a power input terminal, a power output terminal, and a charger and any one of the foregoing battery equalization circuits that are located between the power input terminal and the power output terminal. The charger is coupled to the battery equalization circuit and configured to charge the battery equalization circuit. A technical effect of the uninterruptible power system is the same as that of the battery equalization circuit provided in the foregoing embodiment, and details are not repeated herein.

According to a third aspect of the embodiments of this application, a method for controlling any one of the battery equalization circuits described above. The control method includes: first, collecting a voltage value of each battery cell; then, obtaining a strong battery with a maximum voltage value and a weak battery with a minimum voltage value from a plurality of battery cells; then, inputting a strobe signal to respective strobe terminals of a first bidirectional switch and a second bidirectional switch that are coupled to the strong battery, and charging an energy storage device by using the strong battery; and then, collecting a voltage value of the energy storage device, when the voltage value of the strong battery is the same as the voltage value of the energy storage device, inputting a strobe signal to respective strobe terminals of a first bidirectional switch and a second bidirectional switch that are coupled to the weak battery, and charging the weak battery by using the energy storage device. A technical effect of the method for controlling the battery equalization circuit is the same as that of the battery equalization circuit provided in the foregoing embodiment, and details are not repeated herein.

Optionally, after the inputting a strobe signal to respective strobe terminals of a first bidirectional switch and a second bidirectional switch that are coupled to the strong battery, and before the inputting a strobe signal to respective strobe terminals of a first bidirectional switch and a second bidirectional switch that are coupled to the weak battery, the control method further includes: setting a first dead time, and in the first dead time, inputting a cut-off signal to respective strobe terminals of all first bidirectional switches and all second bidirectional switches, where the energy storage device is in a static energy storage state. The first dead time is greater than or equal to shutdown duration of the first bidirectional switch and the second bidirectional switch. In this way, a charging state and a discharging state, adjacent to each other, of the energy storage device can be separated by setting the first dead time. This avoids that the first bidirectional switch and the second bidirectional switch that are coupled to the strong battery and the first bidirectional switch and the second bidirectional switch that are coupled to the weak battery are simultaneously turned on.

Optionally, after the charging the weak battery by using the energy storage device, the method further includes: when a voltage value of the weak battery is the same as the voltage value of the energy storage device, setting a second dead time, and in the second dead time, inputting a cut-off signal to the respective strobe terminals of all the first bidirectional switches and all the second bidirectional switches, so that the energy storage device is in the static energy storage state; and then, repeating the step of collecting a voltage value of each battery cell and subsequent steps until voltage values of the plurality of battery cells are the same. A technical effect of setting the second dead time is the same as that described above, and is not repeated herein. In addition, when there is a weak battery and a strong battery with different voltage in a plurality of battery cells, the foregoing steps may be repeated to perform voltage equalization on the plurality of battery cells until voltage of all the battery cells becomes equalized.

### BRIEF DESCRIPTION OF DRAWINGS

FIG. 1 is a schematic structural diagram of an uninterruptible power system according to an embodiment of this application;
FIG. 2 is a schematic structural diagram of a battery equalization circuit in FIG. 1;
FIG. 3a is a schematic diagram of performing voltage equalization on voltage of a plurality of battery cells in FIG. 2;
FIG. 3b is a schematic diagram of transferring power from a strong battery to a weak battery in FIG. 3a;
FIG. 4 is a timing control diagram of voltage equalization according to an embodiment of this application;
FIG. 5 is another schematic structural diagram of a battery equalization circuit in FIG. 1;
FIG. 6 is a flowchart of a method for controlling a battery equalization circuit according to an embodiment of this application;
FIG. 7 is another schematic structural diagram of a battery equalization circuit in FIG. 1;
FIG. 8 is a schematic diagram of voltage equalization of a strong battery and a weak battery in FIG. 7; and
FIG. 9 is another schematic structural diagram of a battery equalization circuit in FIG. 1.

### Reference numerals in the drawings:

01. uninterruptible power system; 100. charger; 10. battery equalization circuit; 20. equalization sub-circuit; 200. battery group; 201. battery cell; 211. first bidirectional switch; 212. second bidirectional switch; 30. energy storage device; 40. processor; 401. voltage collection sub-circuit; 402. voltage comparison sub-circuit; and 403. strobe control sub-circuit.

### DESCRIPTION OF EMBODIMENTS

The following describes the technical solutions in this application with reference to the accompanying drawings. Apparently, the described technical solutions are some but not all of the embodiments of this application.

In this application document, terms "first", "second", "third", and "fourth" are only intended for a distinguishing purpose, and cannot be understood as a modification to a following noun. In the description of this application, unless otherwise stated, "a plurality of' means at least two.

In addition, in this application, the directional terms such as "upper", "lower", "left", "right", and the like are defined relative to schematic placement orientations of components in the drawings, and it should be understood that these directional terms are relative concepts for relative description and clarification, and may change accordingly based on the schematic placement orientations of the components in the drawings.

In this application, unless expressly stated and limited otherwise, "coupling" should be understood in a broad sense. For example, "coupling" may be direct coupling or indirect coupling through an intermediate medium.

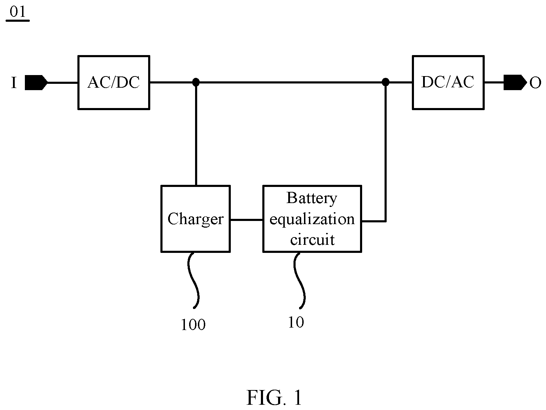

An embodiment of this application provides an uninterruptible power system. As shown in FIG. 1, a uninterruptible power system 01 includes a power input terminal I, a power output terminal O, and an alternating current (alternating current, AC)/direct current (direct current, DC) converter, a charger 100, a battery equalization circuit 10, and a DC/AC converter that are located between the power input terminal I and the power output terminal O.

When mains are input from the power input terminal I, the mains are converted into direct current through AC/DC converter, and then converted through the DC/AC converter into alternating current that is output to load through the power output terminal O.

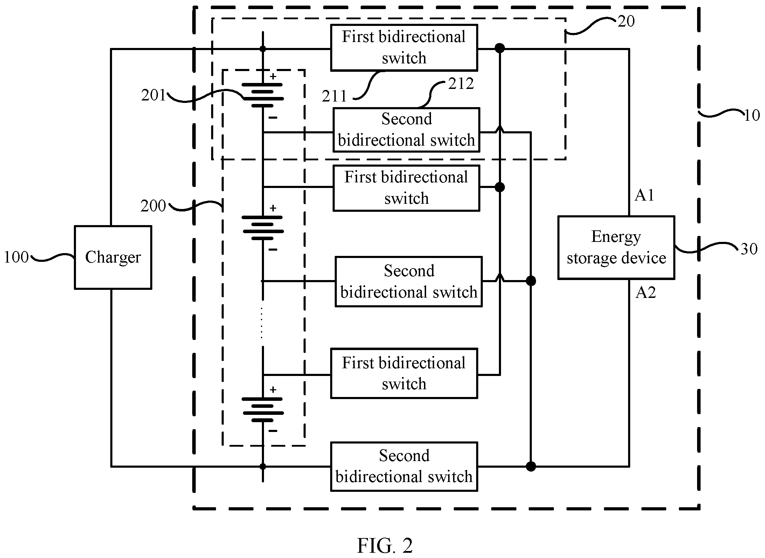

In addition, as shown in FIG. 2, the battery equalization circuit 10 includes a plurality of equalization sub-circuits 20. Each equalization sub-circuit includes a battery cell 201. Battery cells 201 of the plurality of equalization sub-circuits 20 are connected in series to form a battery group 200.

It should be noted that the battery cells 201 of the plurality of equalization sub-circuits 20 being connected in series means that the plurality of battery cells 201 are sequentially arranged one by one, and that a negative electrode (denoted by "―") of the former of two adjacent battery cells 201 is coupled to a positive electrode (denoted by "+") of the latter battery cell 201.

For example, in some embodiments of this application, the battery cell 201 may be a lithium-iron phosphate battery (LiFePO4, LPF). Alternatively, in other embodiments of this application, the battery cell 201 may be a valve regulated lead acid (valve regulated lead acid, VRLA) battery.

In this case, the charger 100 in FIG. 1 is coupled to the battery group 200 of the battery equalization circuit 10 in FIG. 2, so that mains input from the power input terminal I are converted into direct current by the AC/DC converter and stored into the battery group 200 under the action of the charger 100.

Based on this, when the mains are interrupted, no mains are input into the power input terminal I. In this case, the battery group 200 may convert stored electric energy into alternating current by using the DC/AC converter, and then supply power to load through the power output terminal O, so as to substitute the mains to continue power supply for the load, thereby implementing uninterruptible power supply for the load.

In addition, as shown in FIG. 2, the battery equalization circuit 10 further includes an energy storage device 30. The energy storage device 30 is configured to store or discharge power. In addition, the equalization sub-circuit 20 further includes a first bidirectional switch 211 and a second bidirectional switch 212.

A first terminal of the first bidirectional switch 211 is coupled to a positive electrode (denoted by "+") of the battery cell 201, and a second terminal of the first bidirectional switch 211 is coupled to a first terminal A1 of the energy storage device 30. When a strobe terminal (not shown in FIG. 2, it should be understood that the strobe terminal of the first bidirectional switch 211 is different from the first terminal of the first bidirectional switch 211 and the second terminal of the first bidirectional switch 211) of the first bidirectional switch 211 receives a turning-on signal, the first bidirectional switch 211 is turned on and configured to couple the positive electrode of the battery cell 201 to the first terminal A1 of the energy storage device 30.

A first terminal of the second bidirectional switch 212 is coupled to a negative electrode (denoted by "― ") of the battery cell 201, and a second terminal of the second bidirectional switch 212 is coupled to a second terminal A2 of the energy storage device 30. When a strobe terminal (not shown in FIG. 2, it should be understood that the strobe terminal of the second bidirectional switch 212 is different from the first terminal of the second bidirectional switch 212 and the second terminal of the second bidirectional switch 212) of the second bidirectional switch 212 receives a turning-on signal, the second bidirectional switch 212 is turned on and configured to couple the negative electrode of the battery cell 201 to the second terminal A2 of the energy storage device 30.

In this case, when strobe terminals of a first bidirectional switch 211 and a second bidirectional switch 212 that are coupled to a battery cell 201 receive a turning-on signal, the battery cell 201 and the energy storage device 30 can transmit electric energy between each other. When the strobe terminals of the first bidirectional switch 211 and the second bidirectional switch 212 receive a cut-off signal, the battery cell 201 is disconnected from the energy storage device 30.

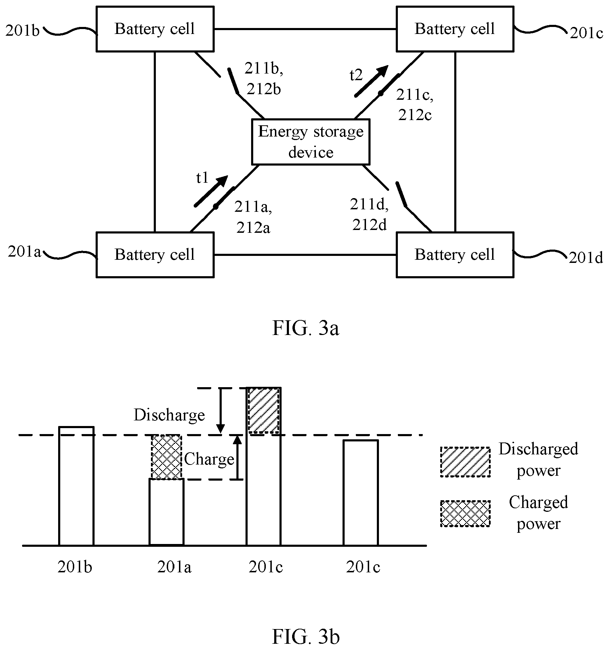

For example, the battery group 200 includes a battery cell 201a, a battery cell 201b, a battery cell 201c, and a battery cell 201d that are connected in series, as shown in FIG. 3a. In the four battery cells, the battery cell 201a has a maximum voltage value and the battery cell 201c has a minimum voltage value.

It should be noted that in this embodiment of this application, a voltage value of a battery cell is a voltage difference between positive voltage and negative voltage of the battery cell.

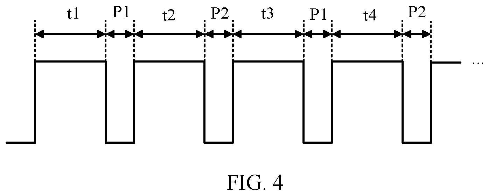

In this case, at a time point t1 shown in FIG. 4, strobe terminals of a first bidirectional switch 211a and a second bidirectional switch 212a that are coupled to the battery cell 201a in FIG. 3a receive a turning-on signal. The first bidirectional switch 211a and the second bidirectional switch 212a may be equivalent to wires. In this case, the battery cell 201a acts as a strong battery and may discharge electric energy to the energy storage device 30 along an arrow direction shown in FIG. 3a to charge the energy storage device 30. The battery cell 201a is in a discharged state, and the energy storage device 30 is in a charged state.

It should be noted that at the time point t1, to isolate the battery cell 201a acting as a strong battery from other battery cells such as the battery cell 201b, the battery cell 201c, and the battery cell 201d, only the first bidirectional switch 211a and the second bidirectional switch 212a are turned on at the time point t1, and other bidirectional switches such as a first bidirectional switch 211b, a second bidirectional switch 212b, a first bidirectional switch 211c, a second bidirectional switch 212c, a first bidirectional switch 211d, and a second bidirectional switch 212d are all turned off, thereby avoiding short-circuit of other battery cells during discharging of the battery cell 201a.

At a time point t2 shown in FIG. 4, strobe terminals of the first bidirectional switch 211c and the second bidirectional switch 212c that are coupled to the battery cell 201c in FIG. 3a receive a turning-on signal. The first bidirectional switch 211c and the second bidirectional switch 212c may be equivalent to wires. In this case, the energy storage device 30 can discharge stored electric energy to the battery cell 201c acting as a weak battery along an arrow direction shown in FIG. 3a, to charge the battery cell 201c. The battery cell 201c is in a charged state, and the energy storage device 30 is in a discharged state.

It should be noted that at the time point t2, to isolate the battery cell 201c acting as a weak battery from other battery cells such as the battery cell 201a, the battery cell 201b, and the battery cell 201d, only the first bidirectional switch 211c and the second bidirectional switch 212c are turned on at the time point t2, and other bidirectional switches such as the first bidirectional switch 211a, the second bidirectional switch 212a, the first bidirectional switch 211b, the second bidirectional switch 212b, the first bidirectional switch 211d, and the second bidirectional switch 212d are all turned off, thereby avoiding short-circuit of other battery cells during charging of the battery cell 201c.

In addition, for the battery cell 201b and the battery cell 201d whose voltage values are between those of the strong battery and the weak battery, it can be learned from the foregoing that at the time points t1 and t2, strobe terminals of the first bidirectional switch 211b and the second bidirectional switch 212b that are coupled to the battery cell 201b in FIG. 3a receive a cut-off signal, and the battery cell 201b is disconnected from the energy storage device 30. Therefore, the battery cell 201b is in a non-charged and non-discharged state.

Similarly, it can be learned from the foregoing that at the time points t1 and t2, strobe terminals of the first bidirectional switch 211d and the second bidirectional switch 212d that are coupled to the battery cell 201d in FIG. 3a receive a cut-off signal, and the battery cell 201d is disconnected from the energy storage device 30. Therefore, the battery cell 201d is in a non-charged and non-discharged state.

In this way, as shown in FIG. 3b, excess power of the battery cell 201a acting as a strong battery is transferred to the battery cell 201c acting as a weak battery through the energy storage device 30, so that voltage values of the battery cell 201a and the battery cell 201c are equalized.

Then, voltage values of the four battery cells may continue to be compared to find a strong battery and a weak battery. Then, at a time point t3 shown in FIG. 4, the strong battery is enabled to be in a discharged state, and the energy storage device 30 is enabled to be in a charged state. At a time point t4 shown in FIG. 4, the weak battery is enabled to be in a charged state, and the energy storage device is enabled to be in a discharged state. The foregoing steps are performed cyclically until the voltage values of the four batteries are the same or approximately the same, so that voltage values of the battery cells 201 in the battery group 200 are equalized.

The following illustrates a structure of the energy storage device 30 and a disposition manner of the first bidirectional switch 211 and the second bidirectional switch 212 with different examples.

### Example 1

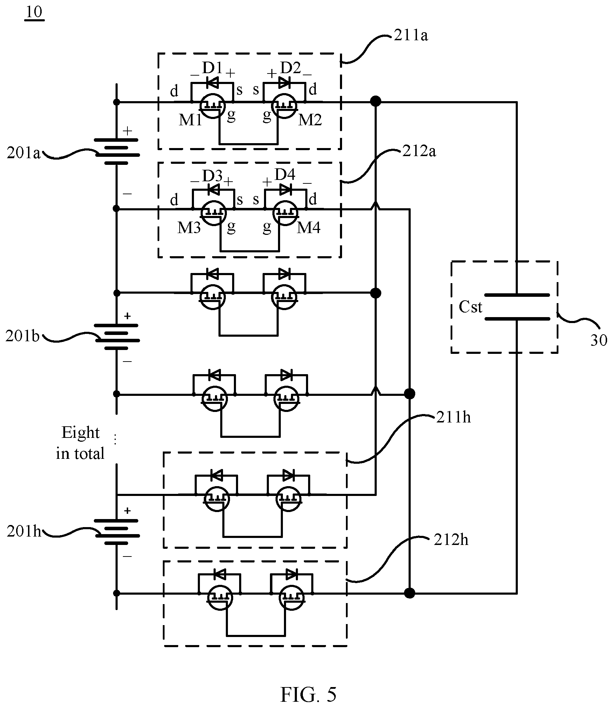

In this example, the energy storage device 30 includes at least one capacitor Cst. FIG. 5 illustrates an example in which the energy storage device 30 includes one capacitor Cst. In addition, as shown in FIG. 5, the first bidirectional switch 211a coupled to the battery cell 201a includes a first switch tube M1, a second switch tube M2, a first diode D1, and a second diode D2. The first switch tube M1 and the second switch tube M2 are disposed facing away from each other. The second bidirectional switch 212a coupled to the battery cell 201a includes a third switch tube M3, a fourth switch tube M4, a third diode D3, and a fourth diode D4. The third switch tube M3 and the fourth switch tube M4 are disposed facing away from each other.

It should be noted that the switch tube may be an insulated gate bipolar transistor (insulated gate bipolar transistor, IGBT) or a metal oxide semiconductor field effect transistor (metal oxide semiconductor field effect transistor, MOSFET). For ease of description, description is provided below by using an example in which the switch tube is a MOSFET. In some embodiments of this application, the MOSFET may be an N-type MOSFET. In this case, a first pole of the switch tube is referred to as a drain (drain, d), and a second pole of the switch tube is referred to as a source (source, s). Alternatively, in some other embodiments of this application, the MOSFET may be a P-type MOSFET. In this case, a first pole of the switch tube is referred to as a source s, and a second pole of the switch tube is referred to as a drain d. For ease of description, description is provided below by using an example in which each switch tube is the N-type MOSFET.

It should be noted that in Example 1, a connection manner of the switch tubes and the diodes of the first bidirectional switch 211a and the second bidirectional switch 212a is described by using only an example in which the first bidirectional switch 211a and the second bidirectional switch 212a are coupled to the battery cell 201a. It should be known that for a first bidirectional switch coupled to each of the other battery cells, reference may be made to the description or limitation of the first bidirectional switch 211a in Example 1, and for a second bidirectional switch coupled to each of the other battery cells, reference may be made to the description or limitation of the second bidirectional switch 212a in Example 1.

As shown in FIG. 5, a first pole, for example, a drain d, of the first switch tube M1 is coupled to a positive electrode (denoted by "+") of the battery cell 201a. In addition, the first switch tube M1 and the second switch tube M2 are disposed facing away from each other, and therefore a second pole, for example, a source s, of the first switch tube M1 is coupled to a second pole, for example, a source s, of the second switch tube. A first pole, for example, a drain d, of the second switch tube M2 is coupled to the first terminal of the energy storage device 30, for example, an upper plate of the capacitor Cst.

In addition, a gate g of the first switch tube M1 is coupled to a gate g of the second switch tube M2, and serves as the strobe terminal of the first bidirectional switch 211. In this case, when the gate g of the first switch tube M1 and the gate g of the second switch tube M2 receive a turning-on signal, for example, at a high level, both the first switch tube M1 and the second switch tube M2 are turned on. In this case, the first bidirectional switch 211a is turned on.

Based on this, a positive electrode (denoted by "+") of the first diode D1 is coupled to the second pole, for example, the source s, of the first switch tube M1, and a negative electrode (denoted by "―") of the first diode D1 is coupled to the first pole, for example, the drain d, of the first switch tube M1. A positive electrode (denoted by "+") of the second diode D2 is coupled to the second pole, for example, the source s, of the second switch tube M2, and a negative electrode (denoted by "―") of the second diode D2 is coupled to the first pole, for example, the drain d, of the second switch tube M2.

In this case, when the battery cell 201a needs to charge the capacitor Cst, the first switch tube M1 and the second switch tube M2 may be controlled to be on. In this case, a voltage value of the drain d of the first switch tube M1 is greater than a voltage value of the source s of the first switch tube M1, and charging current passes through the first switch tube M1. However, a voltage value of the source s of the second switch tube M2 is greater than a voltage value of the drain d of the second switch tube M2, and the charging current cannot be directly transmitted through the second switch tube M2. However, the second diode D2 has a feature of unidirectional conduction, and therefore the charging current can be transmitted to the capacitor Cst through the second diode D2.

In contrast, when the capacitor Cst needs to charge the battery cell 201a, the first switch tube M1 and the second switch tube M2 may be controlled to be on. In this case, a voltage value of the drain d of the second switch tube M2 is greater than a voltage value of the source s of the second switch tube M2, and charging current passes through the second switch tube M2. However, a voltage value of the source s of the first switch tube M1 is greater than a voltage value of the drain d of the first switch tube M1, and the charging current cannot be directly transmitted through the first switch tube M1. However, the first diode D1 has a feature of unidirectional conduction, and therefore the charging current can be transmitted to the battery cell 201a through the first diode D1.

In addition, when the gate g of the first switch tube M1 and the gate g of the second switch tube M2 receive a cut-off signal, for example, at a low level, both the first switch tube M1 and the second switch tube M2 are cut off. In this case, the first bidirectional switch 211a is turned off. In this way, the first bidirectional switch 211a can be turned on and off in both a forward direction (for example, charging the capacitor Cst) and a reverse direction (for example, discharging power to the battery cell by the capacitor Cst).

In addition, in the second bidirectional switch 212a, a first pole, for example, a drain d, of the third switch tube M3 is coupled to the negative electrode (denoted by "―") of the battery cell 201a. In addition, the third switch tube M3 and the fourth switch tube M4 are disposed facing away from each other, and therefore a second pole, for example, a source s, of the third switch tube M3 is coupled to a second pole, for example, a source s, of the fourth switch tube M4. A first pole, for example, a drain d, of the fourth switch tube M4 is coupled to the second terminal of the energy storage device 30, for example, a lower plate of the capacitor Cst.

In addition, a gate g of the third switch tube M3 is coupled to a gate g of the fourth switch tube M4, and serves as the strobe terminal of the second bidirectional switch 212a. In this case, when the gate g of the third switch tube M3 and the gate g of the fourth switch tube M4 receive a turning-on signal, for example, at a high level, both the third switch tube M3 and the fourth switch tube M4 are turned on. In this case, the second bidirectional switch 212a is turned on.

Based on this, a negative electrode (denoted by "―") of the third diode D3 is coupled to the first pole, for example, the drain d, of the third switch tube M3, and a positive electrode (denoted by "+") of the third diode D3 is coupled to the second pole, for example, the source s, of the third diode M3. A negative electrode (denoted by "―") of the fourth diode D4 is coupled to the first pole, for example, the drain d, of the fourth switch tube M4, and a positive electrode (denoted by "+") of the fourth diode M4 is coupled to the second pole, for example, the source s, of the fourth switch tube M4.

In this case, similarly, when the battery cell 201a needs to charge the capacitor Cst, the third switch tube M3 and the fourth switch tube M4 may be controlled to be on, and charging the capacitor Cst can be implemented by using a feature of unidirectional conduction of the fourth diode D4. When the capacitor Cst needs to charge the battery cell 201a, the third switch tube M3 and the fourth switch tube M4 may be controlled to be on, and discharging Cst can be implemented by using a feature of unidirectional conduction of the third diode D3.

In addition, when the gate g of the third switch tube M3 and the gate g of the fourth switch tube M4 receive a cut-off signal, for example, at a low level, both the third switch tube M3 and the fourth switch tube M4 are cut off. In this case, the second bidirectional switch 212a is turned off. In this way, the second bidirectional switch 212a can be turned on and off in both a forward direction (for example, charging the capacitor Cst) and a reverse direction (for example, discharging power to the battery cell by the capacitor Cst).

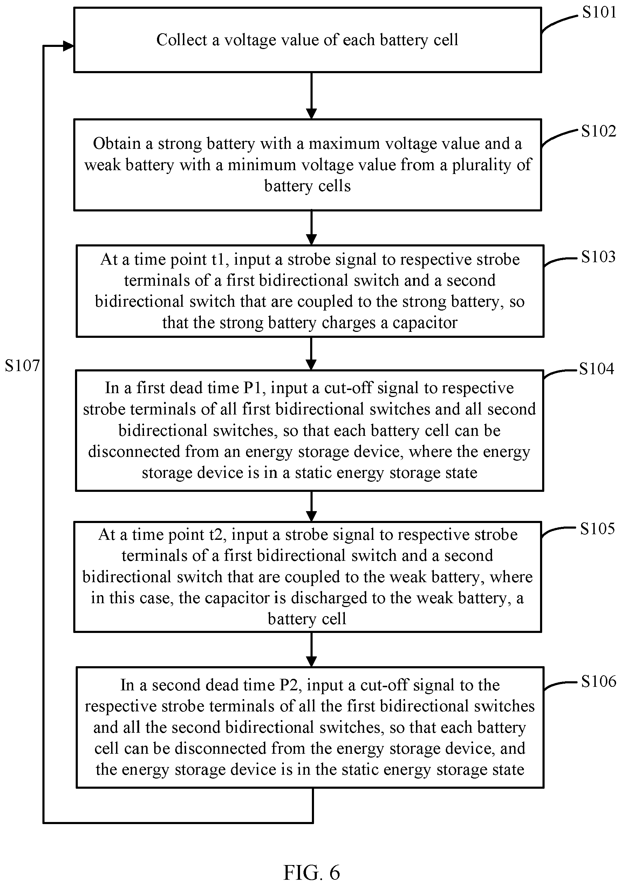

The following details a method for controlling the battery equalization circuit 10 in FIG. 5. In FIG. 5, description is provided by using an example in which the battery equalization circuit 10 includes eight battery cells (for example, the battery cell 201a, the battery cell 201b, the battery cell 201c, the battery cell 201d, a battery cell 201e, a battery cell 201f, a battery cell 201g, and a battery cell 201h). The method for controlling the battery equalization circuit 10 is shown in FIG. 6 and includes steps S101 to S107.

S101. Collect a voltage value of each battery cell (for example, the battery cell 201a, the battery cell 201b, ..., and the battery cell 201h).

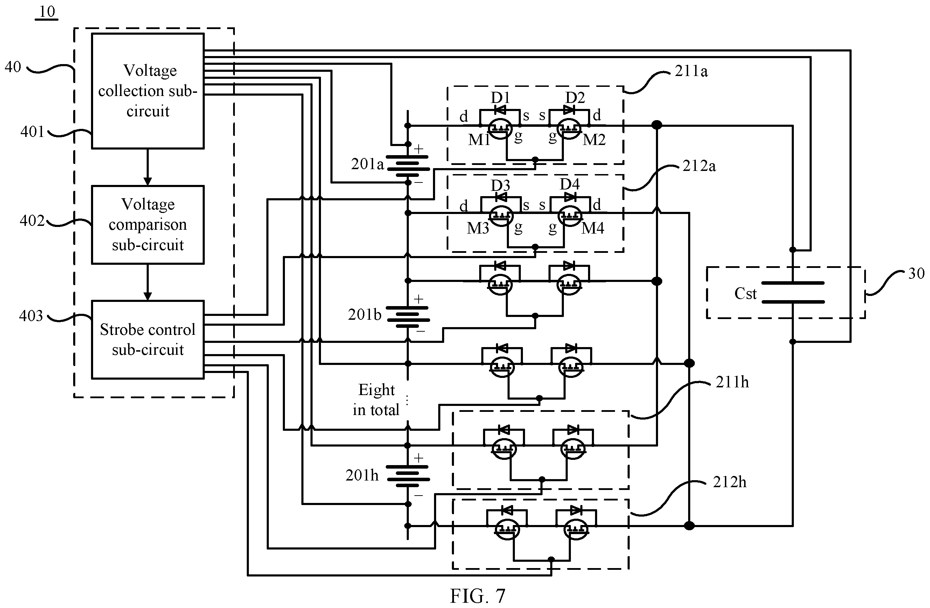

To implement this step, in some embodiments of this application, the battery equalization circuit 10 further includes a processor 40, as shown in FIG. 7. The processor 40 may be a central processing unit (central processing unit, CPU), an application specific integrated circuit (application specific integrated circuit, ASIC), or one or more integrated circuits, for example, one or more microprocessors for example, a digital signal processor (digital signal processor, DSP), or one or more field programmable gate arrays (field programmable gate array, FPGA).

The processor 40 includes a voltage collection sub-circuit 401. As shown in FIG. 7, the voltage collection sub-circuit 401 is configured to be coupled to a positive electrode and a negative electrode of each battery cell such as the battery cell 201a, the battery cell 201b, ..., and the battery cell 201h, so that the voltage collection sub-circuit 401 may collect a voltage value of each battery cell based on a voltage difference between positive voltage and negative voltage of each battery cell.

In addition, the voltage collection sub-circuit 401 is further configured to be coupled to the first terminal and the second terminal (for example, the upper plate and the lower plate of the capacitor Cst) of the energy storage device 30, so that the voltage collection sub-circuit 401 may further collect a voltage value of the energy storage device 30 based on a voltage difference between first terminal voltage and second terminal voltage of the energy storage device 30.

S102. Obtain a strong battery with a maximum voltage value and a weak battery with a minimum voltage value from a plurality of battery cells (for example, the battery cell 201a, the battery cell 201b, ..., and the battery cell 201h).

To implement this step, in some embodiments of this application, the processor 40 further includes a voltage comparison sub-circuit 402, as shown in FIG. 7. The voltage comparison sub-circuit 402 is coupled to the voltage collection sub-circuit 401.

The voltage comparison sub-circuit 402 may receive the voltage value that is of each battery cell (for example, the battery cell 201a, the battery cell 201b, ..., and the battery cell 201h) in the plurality of battery cells and that is collected by the voltage collection sub-circuit 401, and then compare the voltage values of the battery cells to find, from the plurality of battery cells, the strong battery with the maximum voltage value, for example, the battery cell 201a, and the weak battery with the minimum voltage value, for example, the battery cell 201h.

In some embodiments of this application, the voltage comparison sub-circuit 402 may sort the voltage values of the plurality of battery cells such as the battery cell 201a, the battery cell 201b, ..., and the battery cell 201h in an ascending order or a descending order, to obtain the weak battery and the strong battery. The foregoing is only an example of a method for obtaining the weak battery and the strong battery, and other methods are not described one by one.

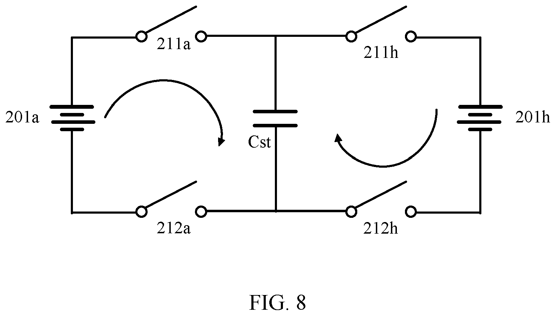

S103. At the time point t1 shown in FIG. 4, input a strobe signal to the strobe terminals of the first bidirectional switch 211a and the second bidirectional switch 212a that are coupled to the strong battery (for example, the battery cell 201a), so that the strong battery (for example, the battery cell 201a) charges the capacitor Cst in an arrow direction shown in FIG. 8.

To perform this step, the processor 40 further includes a strobe control sub-circuit 403, as shown in FIG. 7. The strobe control sub-circuit 403 is coupled to a strobe terminal of each first bidirectional switch, a strobe terminal of each second bidirectional switch, and the voltage comparison sub-circuit 402.

The strobe control sub-circuit 403 may input, based on the strong battery determined by the voltage comparison sub-circuit 402, the strobe signal to the respective strobe terminals of the first bidirectional switch 211a and the second bidirectional switch 212a that are coupled to the strong battery (for example, the battery cell 201a), so that the strong battery (the battery cell 201a) is coupled to the capacitor Cst, so as to transmit excess power of the strong battery (the battery cell 201a) to the capacitor Cst.

In this case, the strobe control sub-circuit 403 inputs a cut-off signal to strobe terminals of first bidirectional switches and second bidirectional switches that are coupled to other battery cells (for example, the battery cell 201b, ..., and the battery cell 201h), so that the other battery cells (for example, the battery cell 201b, ..., and the battery cell 201h) are disconnected from the capacitor Cst.

In addition, the voltage comparison sub-circuit 402 may further compare the voltage values of the strong battery (for example, the battery cell 201a) and the energy storage device 30 (for example, the capacitor Cst). In this case, when the voltage value of the strong battery (for example, the battery cell 201a) is the same as the voltage value of the energy storage device 30 (the capacitor Cst in FIG. 7), the strobe control sub-circuit 403 may further input, based on a comparison result of the voltage comparison sub-circuit 402, a cut-off signal to the respective strobe terminals of the first bidirectional switch 211a and the second bidirectional switch 212a that are coupled to the strong battery (for example, the battery cell 201a), so that when the time point t1 in FIG. 4 expires, the strong battery (for example, the battery cell 201a) is decoupled from the energy storage device 30 (the capacitor Cst in FIG. 7).

S104. In a first dead time PI between the time point t1 and the time point t2 in FIG. 4, input a cut-off signal to strobe terminals of all first bidirectional switches and strobe terminals of all second bidirectional switches, or input a cut-off signal to respective strobe terminals of a first bidirectional switch and a second bidirectional switch that are coupled to each battery cell, so that each battery cell can be disconnected from the energy storage device 30 (for example, the capacitor Cst). The energy storage device 30 is in a static energy storage state.

The first dead time PI is greater than or equal to shutdown duration of the first bidirectional switch and the second bidirectional switch. In this way, with the first dead time PI that is set, the time point t1 when the energy storage device 30 (for example, the capacitor Cst) is in the charged state can be separated from the time point t2 when the energy storage device 30 (for example, the capacitor Cst) is in the discharged state. This avoids simultaneous turning-on of a first bidirectional switch and a second bidirectional switch that are coupled to the strong battery and a first bidirectional switch and a second bidirectional switch that are coupled to the weak battery, specifically, for example, simultaneous turning-on of the first bidirectional switch 211a and the second bidirectional switch 212a that are coupled to the battery cell 201a and a first bidirectional switch 211g and a second bidirectional switch 212g that are coupled to the battery cell 201h.

To perform this step, in the first dead time PI, the strobe control sub-circuit 403 in FIG. 7 may input the cut-off signal to the respective strobe terminals of the first bidirectional switch and the second bidirectional switch that are coupled to each battery cell, to turn off each first bidirectional switch and each second bidirectional switch, so that the energy storage device 30 is in the static energy storage state.

S105. At the time point t2 in FIG. 4, input a strobe signal to the respective strobe terminals of the first bidirectional switch and the second bidirectional switch that are coupled to the weak battery (for example, the respective strobe terminals of the first bidirectional switch 211g and the second bidirectional switch 212g that are coupled to the battery cell 201h). In this case, the capacitor Cst is discharged to the weak battery (for example, the battery cell 201h) in an arrow direction in FIG. 8.

To perform this step, at the time point t2, the strobe control sub-circuit 403 may input, based on a battery cell determined by the voltage comparison sub-circuit 402 as the weak battery, for example, the battery cell 201h determined as the weak battery, a strobe signal to the respective strobe terminals of the first bidirectional switch 211g and the second bidirectional switch 212g that are coupled to the battery cell 201h, so that the capacitor Cst is coupled to the battery cell 201h to transmit excess power of the capacitor Cst to the battery cell 201h.

In this case, the strobe control sub-circuit 403 inputs a cut-off signal to respective strobe terminals of a first bidirectional switch and a second bidirectional switch that are coupled to each of other battery cells, so that each of the other battery cells is disconnected from the energy storage device 30 (for example, the capacitor Cst).

In addition, the voltage comparison sub-circuit 402 may further compare voltage of the weak battery (for example, the battery cell 201h) and the energy storage device 30 (for example, the capacitor Cst). In this case, when the voltage value of the weak battery (for example, the battery cell 201h) is the same as the voltage value of the capacitor Cst, the strobe control sub-circuit 403 may further input, based on a comparison result of the voltage comparison sub-circuit 402, a cut-off signal to the respective strobe terminals of the first bidirectional switch 211g and the second bidirectional switch 212g that are coupled to the battery cell 201h, so that when the time point t2 in FIG. 4 expires, the battery cell 201h is decoupled from the capacitor Cst.

S106. In a second dead time P2 between the time point t2 and the time point t3 in FIG. 4, input a cut-off signal to the strobe terminals of all the first bidirectional switches and the strobe terminals of all the second bidirectional switches, or input a cut-off signal to the respective strobe terminals of the first bidirectional switch and the second bidirectional switch that are coupled to each battery cell, so that each battery cell can be disconnected from the energy storage device 30 (for example, the capacitor Cst), and the energy storage device 30 is in a static energy storage state.

The second dead time P2 is greater than or equal to the shutdown duration of the first bidirectional switch and the second bidirectional switch. In this way, with the second dead time P2 that is set, the time point t2 when the capacitor Cst is in the discharged state can be separated from the time point t3 when the capacitor Cst is in the charged state.

S107. Repeat S101 to S106 until voltage values of the battery cell 201a, the battery cell 201b, ..., and battery cell 201h are the same.

As shown in FIG. 4, the capacitor Cst has an isolation dead time, for example, the first dead time PI or the second dead time P2, between any adjacent charge time point and discharge time point. It can be learned from the foregoing that the first dead time PI is between a charge time point (for example, t1) and a discharge time point (for example, t2) of the capacitor Cst. The second dead time P2 is between the discharge time point (for example, t2) and a charge time point (for example, t3) of the capacitor.

In conclusion, for each equalization sub-circuit 20, the second terminal of the first bidirectional switch 211 is coupled to the first terminal A1 of the energy storage device 30, and the second terminal of the second bidirectional switch 212 is coupled to the second terminal A2 of the energy storage device 30. Therefore, the plurality of equalization sub-circuits 20 are coupled to the same energy storage device 30. In this case, the strong battery with the maximum voltage value and the weak battery with the minimum voltage value can be selected from the plurality of battery cells 201 by obtaining the respective voltage values of the plurality of battery cells 201 of the battery equalization circuit 10. The first bidirectional switch 211 and the second bidirectional switch 212 that are coupled to the strong battery are controlled to be on, so that the strong battery can be coupled to the energy storage device 30 and excess power of the strong battery can be transmitted to the energy storage device 30 to charge the energy storage device 30. When the voltage value of the energy storage device 30 is the same as the voltage value of the strong battery, the first bidirectional switch 211 and the second bidirectional switch 212 that are coupled to the strong battery are controlled to be off to stop charging the energy storage device 30.

Then, after a dead time elapses, the first bidirectional switch 211 and the second bidirectional switch 212 that are coupled to the weak battery are controlled to be on, so that power stored in the energy storage device 30 can be transmitted to the weak battery to charge the weak battery. When the voltage value of the weak battery is the same as the voltage value of the energy storage device 30, the first bidirectional switch 211 and the second bidirectional switch 212 that are coupled to the weak battery are controlled to be off to stop the energy storage device 30 from discharging.

Then, it may proceed to determine whether the respective voltage values of the plurality of battery cells 201 are equalized. If not equalized, the foregoing steps are repeated until the respective voltage values of the battery cells 201 become equalized.

It can be learned from the foregoing that: first, excess voltage of the strong battery is eventually transferred to the weak battery through the energy storage device 30, so that final voltage values of the strong battery and the weak battery are equalized. Therefore, compared with a passive equalization mode in which a resistor consumes excess power of a battery, the battery equalization circuit 10 provided in the embodiments of this application can reduce energy loss during voltage equalization.

Second, in the battery equalization circuit 10 provided in the embodiments of this application, each battery cell 201 is connected to the energy storage element 30 by using only a first bidirectional switch 211 and a second bidirectional switch 212. Therefore, compared with an active equalization mode in which each battery needs to be connected to an isolated bidirectional DC/DC converter, the circuit is simpler and good for cost reduction.

Third, during voltage equalization of the battery equalization circuit 10 provided in the embodiments of this application, electric energy of the strong battery can be transferred point-to-point to the weak battery. The strong battery is the battery cell with the maximum voltage value in the plurality of battery cells 201 of the battery group 200, and the weak battery is the battery cell with the minimum voltage value in the plurality of battery cells 201 of the battery group 200. Therefore, there may be a plurality of other battery cells 201 connected in series between the strong battery and the weak battery. Compared with a solution in which voltage equalization can be merely transferred between two adjacent batteries, the solution provided in this application can implement cross-battery transfer, thereby improving efficiency of voltage equalization.

It should be noted that FIG. 5 illustrates an example in which the energy storage device 30 is a capacitor Cst. In other embodiments of this example, the energy storage device 30 may further include a plurality of capacitors Cst. The plurality of capacitors Cst may be connected in parallel, and in this case, the energy storage device 30 may have a relatively large capacitance value. Alternatively, the plurality of capacitors Cst may be connected in series, and in this case, the energy storage device 30 may have relatively large withstand voltage. Alternatively, some of the plurality of capacitors Cst are connected in series, and the other capacitors are connected in parallel.

### Example 2

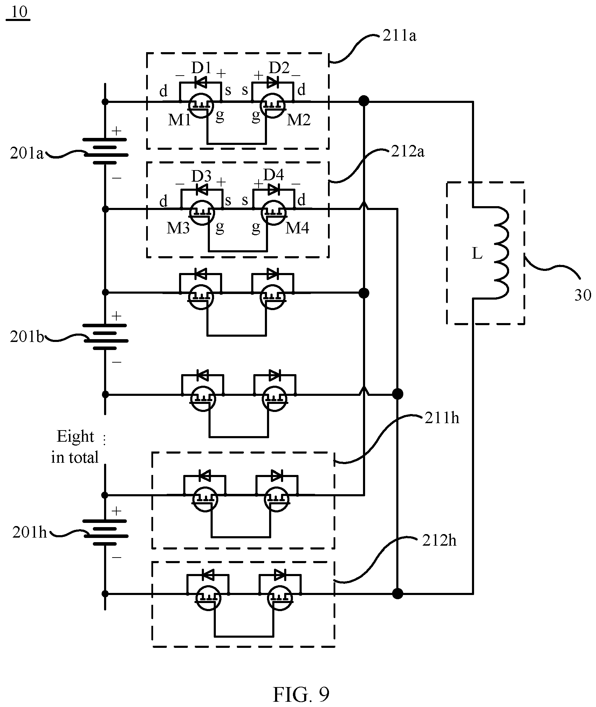

In this example, the energy storage device 30 includes at least one inductor. FIG. 9 illustrates an example in which the energy storage device 30 includes an inductor.

In addition, the same as Example 1, as shown in FIG. 9, the first bidirectional switch 211a coupled to the battery cell 201a includes a first switch tube M1, a second switch tube M2, a first diode D1, and a second diode D2. The first switch tube M1 and the second switch tube M2 are disposed facing away from each other. The second bidirectional switch 212a coupled to the battery cell 201a includes a third switch tube M3, a fourth switch tube M4, a third diode D3, and a fourth diode D4. The third switch tube M3 and the fourth switch tube M4 are disposed facing away from each other.

It should be noted that a connection manner and a working principle of the switch tubes and the diodes are the same as those in Example 1, and are not repeated herein. In addition, for the first bidirectional switch coupled to each of the other battery cells in the solution in FIG. 9, reference may be made to the description and limitation of the first bidirectional switch 211a in this example, and for the second bidirectional switch coupled to each of the other battery cells in the solution in FIG. 9, reference may be made to the description and limitation of the second bidirectional switch 212a in this example. To brevity, the first bidirectional switch or the second bidirectional switch coupled to each of the other battery cells is not described in this example. It should also be noted that the method for controlling the battery equalization circuit 10 in FIG. 9 is the same as the method for controlling the battery equalization circuit 10 in FIG. 5, and corresponding control effects of the two control methods are also the same. Therefore, in this example, the method for controlling the battery equalization circuit 10 in FIG. 9 is no longer described.

FIG. 9 illustrates an example in which the energy storage device 30 is an inductor L. In other embodiments of this example, the energy storage device 30 may further include a plurality of inductors L. The plurality of inductors L may be connected in parallel, and in this case, the energy storage device 30 may have relatively small impedance, thereby reducing generated heat. Alternatively, the plurality of inductors L may be connected in series, and in this case, the energy storage device 30 may have relatively large impedance. Alternatively, some of the plurality of inductors L may be connected in series, and the other inductors may be connected in parallel.

An embodiment of this application provides a computer device. The computer device includes a memory and a processor. The memory stores a computer program capable of running on the processor, and when the processor executes the computer program, the foregoing method is implemented.

In addition, an embodiment of this application provides a computer-readable medium storing a computer program. When the computer program is executed by a processor, the foregoing method is implemented.

The memory may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other media that can be configured to carry or store expected program code in a form of an instruction or a data structure and that is accessible to a computer. However, this does not constitute any limitation. The memory may exist independently and is connected to the processor by using a communications bus. The memory may also be integrated into the processor.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium (for example, an SSD).

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A battery equalization circuit, comprising an energy storage device and a plurality of equalization sub-circuits, wherein each equalization sub-circuit comprises a battery cell, a first bidirectional switch, and a second bidirectional switch;
in each equalization sub-circuit,
a first terminal of the first bidirectional switch is coupled to a positive electrode of the battery cell, a second terminal of the first bidirectional switch is coupled to a first terminal of the energy storage device, and when a strobe terminal of the first bidirectional switch receives a turning-on signal, the first bidirectional switch is turned on and configured to couple the positive electrode of the battery cell to the first terminal of the energy storage device; and
a first terminal of the second bidirectional switch is coupled to a negative electrode of the battery cell, a second terminal of the second bidirectional switch is coupled to a second terminal of the energy storage device, and when a strobe terminal of the second bidirectional switch receives a turning-on signal, the second bidirectional switch is turned on and configured to couple the negative electrode of the battery cell to the second terminal of the energy storage device; and
battery cells of the plurality of equalization sub-circuits are connected in series.

2. The battery equalization circuit according to claim 1, wherein the first bidirectional switch comprises a first switch tube, a second switch tube, a first diode, and a second diode;
a first pole of the first switch tube is coupled to the positive electrode of the battery cell, a second pole of the first switch tube is coupled to a second pole of the second switch tube, and a gate of the first switch tube is coupled to a gate of the second switch tube and serves as the strobe terminal of the first bidirectional switch;
a first pole of the second switch tube is coupled to the first terminal of the energy storage device;
a positive electrode of the first diode is coupled to the second pole of the first switch tube, and a negative electrode of the first diode is coupled to the first pole of the first switch tube; and
a positive electrode of the second diode is coupled to the second pole of the second switch tube, and a negative electrode of the second diode is coupled to the first pole of the second switch tube.

3. The battery equalization circuit according to claim 1 or 2, wherein the second bidirectional switch comprises a third switch tube, a fourth switch tube, a third diode, and a fourth diode;
a first pole of the third switch tube is coupled to the negative electrode of the battery cell, a second pole of the third switch tube is coupled to a second pole of the fourth switch tube, and a gate of the third switch tube is coupled to a gate of the fourth switch tube and serves as the strobe terminal of the second bidirectional switch;
a first pole of the fourth switch tube is coupled to the second terminal of the energy storage device;
a negative electrode of the third diode is coupled to the first pole of the third switch tube, and a positive electrode of the third diode is coupled to the second pole of the third diode; and
a negative electrode of the fourth diode is coupled to the first pole of the fourth switch tube, and a positive electrode of the fourth diode is coupled to the second pole of the fourth switch tube.

4. The battery equalization circuit according to claim 1, wherein the energy storage device comprises at least one capacitor or at least one inductor.

5. The battery equalization circuit according to claim 1, wherein the battery equalization circuit further comprises:
a voltage collection sub-circuit, configured to be coupled to a positive electrode and a negative electrode of each battery cell to collect a voltage value of the battery cell, and be coupled to the first terminal and the second terminal of the energy storage device to collect a voltage value of the energy storage device;
a voltage comparison sub-circuit, coupled to the voltage collection sub-circuit, wherein the voltage comparison sub-circuit is configured to obtain a strong battery with a maximum voltage value and a weak battery with a minimum voltage value from a plurality of battery cells, and compare the voltage value of the strong battery with the voltage value of the energy storage device, and the voltage value of the weak battery with the voltage value of the energy storage device; and
a strobe control sub-circuit, coupled to a strobe terminal of each first bidirectional switch, a strobe terminal of each second bidirectional switch, and the voltage comparison sub-circuit, wherein the strobe control sub-circuit is configured to input a strobe signal to respective strobe terminals of a first bidirectional switch and a second bidirectional switch that are coupled to the strong battery, and when the voltage value of the strong battery is the same as the voltage value of the energy storage device, the strobe control sub-circuit is further configured to input a strobe signal to respective strobe terminals of a first bidirectional switch and a second bidirectional switch that are coupled to the weak battery.

6. An uninterruptible power system, comprising a power input terminal, a power output terminal, and a charger and the battery equalization circuit according to any one of claims 1 to 5 that are located between the power input terminal and the power output terminal, wherein the charger is coupled to the battery equalization circuit and configured to charge the battery equalization circuit.

7. A method for controlling the battery equalization circuit according to any one of claims 1 to 5, wherein the method comprises:
collecting a voltage value of each battery cell;
obtaining a strong battery with a maximum voltage value and a weak battery with a minimum voltage value from a plurality of battery cells;
inputting a strobe signal to respective strobe terminals of a first bidirectional switch and a second bidirectional switch that are coupled to the strong battery, and charging an energy storage device by using the strong battery; and
when the voltage value of the strong battery is the same as a voltage value of the energy storage device, inputting a strobe signal to respective strobe terminals of a first bidirectional switch and a second bidirectional switch that are coupled to the weak battery, and charging the weak battery by using the energy storage device.

8. The method for controlling the battery equalization circuit according to claim 7, wherein
after the inputting a strobe signal to respective strobe terminals of a first bidirectional switch and a second bidirectional switch that are coupled to the strong battery, and before the inputting a strobe signal to respective strobe terminals of a first bidirectional switch and a second bidirectional switch that are coupled to the weak battery, the method further comprises:
setting a first dead time, and in the first dead time, inputting a cut-off signal to respective strobe terminals of all first bidirectional switches and all second bidirectional switches, wherein the energy storage device is in a static energy storage state, and
the first dead time is greater than or equal to shutdown duration of the first bidirectional switch and the second bidirectional switch.

9. The method for controlling the battery equalization circuit according to claim 8, wherein after the charging the weak battery by using the energy storage device, the method further comprises:
when a voltage value of the weak battery is the same as the voltage value of the energy storage device, setting a second dead time, and in the second dead time, inputting a cut-off signal to the respective strobe terminals of all the first bidirectional switches and all the second bidirectional switches, so that the energy storage device is in the static energy storage state; and
repeating the step of collecting a voltage value of each battery cell and subsequent steps until voltage values of the plurality of battery cells are the same, wherein
the second dead time is greater than or equal to the shutdown duration of the first bidirectional switch and the second bidirectional switch.

10. A computer device, comprising a memory and a processor, wherein the memory stores a computer program capable of running on the processor, and when the processor executes the computer program, the method according to any one of claims 7 to 9 is implemented.

11. A computer-readable medium, wherein a computer program is stored in the computer-readable medium, and when the computer program is executed by a processor, the method according to any one of claims 7 to 9 is implemented.
